# EUROPEAN PATENT SPECIFICATION

(11) **EP 4 602 315 B1**
(45) Date of publication and mention of the grant of the patent: **09.12.2026**
(21) Application number: 23790402.4
(22) Date of filing: 12.10.2023
(51) Int. Cl.: F27B 1/00, C04B 7/12, C04B 20/04, C04B 103/00, F27B 15/00, F27B 15/10, F27B 15/12, F27B 15/14, F27D 11/00, F27D 11/02

(54) **AN ELECTRIC ACTIVATION SYSTEM AND METHOD OF ELECTRICALLY ACTIVATING AND PROVIDING A SUPPLEMENTARY CEMENTITIOUS MATERIAL**
ELEKTRISCHES AKTIVIERUNGSSYSTEM UND VERFAHREN ZUR ELEKTRISCHEN AKTIVIERUNG UND BEREITSTELLUNG EINES ZUSÄTZLICHEN ZEMENTARTIGEN MATERIALS
SYSTÈME D'ACTIVATION ÉLECTRIQUE ET PROCÉDÉ D'ACTIVATION ÉLECTRIQUE ET DE FOURNITURE D'UN MATÉRIAU CIMENTAIRE SUPPLÉMENTAIRE

(30) Priority: 12.10.2022 DK PA202200929
(43) Date of publication of application: 20.08.2025
(73) Proprietor: Fuller Technologies Inc., Allentown, PA 18109 (US)
(72) Inventor: SCHMIDT, Iver Blankenberg, 9520 Skørping (DK); MOMME, Rasmus Franklin, 2720 Vanløse (DK)
(74) Representative: Nenadovic, Svetislav
(86) International application number: PCT/IB2023/060272
(87) International publication number: WO 2024/079675

(56) References cited:
- EP-A1- 4 015 479
- WO-A1-2021/224055
- US-A1- 20230 373 854

## Description

### Background

In the cement industry, the use of Supplementary Cementitious Materials (SCM's) is strongly motivated by the possibility of reducing CO₂ emissions. SCM's such as fly ash or calcined clays are materials, which when added in limited amounts, contribute to the properties of hardened concrete through hydraulic or pozzolanic activity. A SCM may thus substitute some of the cement clinker. Since clinker production is a large emitter of CO₂, the use of a SCM may contribute to an overall lower CO₂ emission. Some SCM's need to be activated before obtaining cementitious properties. Clays need to be calcined (dehydroxylated) to obtain cementitious properties. The calcination of clays occurs at lower temperatures than the formation temperature required for cement clinker and thus requires less energy.

The clay calcination process has developed over time from a rotary kiln process called "soak-calcination", where clays lumps were feed into the rotary kiln and calcined for around 20-30 minutes, to a flash calcination process which is a much faster process which provides higher clay activity and less operational costs.

One challenge of using calcined clay is the red colorization of the clay when it is exposed to high temperatures in the presence of oxygen. This is typically due to the presence of iron compounds in the clay which are oxidized in the presence of oxygen to iron oxides. The red color is undesirable to most customers when mixing activated clay with cement clinker to produce cement as the market demands grey cement but not red cement.

Several different techniques exist to avoid the reddish colorization of the clay. In EP3218320 B1, the clay is heated to an activation temperature of 600 to 1050 °C at reducing conditions to avoid the oxidation of iron whereafter the clay is cooled at reducing conditions.

In US8906155 BB, the clay may be calcined at oxidizing conditions whereafter the clay is thermally treated at reducing conditions. Subsequently, the reduced clay is cooled in a first step at reducing conditions to obtain a stable reduced clay compound and thereafter further cooled.

The reducing conditions are typically obtained by displacing oxygen by utilizing a combustion exhaust gas or by adding a carbon source, optionally in combination with the addition of water.

In WO2021/224055, clay is calcined at oxidizing conditions whereafter the clay is thermally treated at reducing conditions. Subsequently, the reduced clay is rapidly cooled in oxidizing conditions to preserve a stable reduced clay compound while enabling to maximize heat recuperation and lower fuel consumption and CO₂ footprint even further.

In US2024018039 AA an inline calcining method is disclosed wherein an electric heater is utilized to generate heat.

EP4033188 A1 discloses an electric calcination apparatus for manufacturing gypsum, in which a portion of the gas is recirculated within the system. EP4015479A1 discloses calcining raw material to obtain cementitious material involves introducing flow of raw material containing metal carbonate into calcination system, and partially decarbonating raw material in first thermal reactor

With the increasing discussions about CO₂ emissions and a possible increase in the price of CO₂ quotes, it is desirable to make the production of SCM's and especially calcined clays even more environmentally friendly and to reduce the emissions of CO₂. Furthermore, it is desirable to improve the temperature control of the calcining system as the calcining temperature has a big influence on the cementitious properties obtained by the calcined SCM. If the SCM is optimally activated (calcined), it achieves better cementitious properties and may thus substitute larger amounts of clinker. This leads to the production of a cement/concrete mixture produced with lower CO₂ emissions.

### Summary

With this background, it is therefore the object of the present invention to provide an alternative process to activate SCM's, by which it is possible to mitigate some of the drawbacks of the prior art. In a first aspect of the invention, these and further objects are obtained by an activation system for activating a solid SCM-precursor material into an activated Supplementary Cementitious Material (SCM) suitable for clinker substitution. The activation system comprising a first subsystem and a second subsystem,
the first subsystem comprising:
   an inlet for providing solid SCM-precursor material and optionally a reducing agent;
   electric heating means suitable for heating a fluid to at least an activation temperature of the solid material;
   an activation vessel for contacting the solid SCM-precursor material with the heated fluid to activate the solid SCM precursor material;
   a fluid outlet configured for at least partially removing volatiles released from the activated solid SCM;
   a separation means configured to substantially separate the activated solid SCM from the fluid;
   means to provide the separated solid material to the second subsystem; and
   wherein the components in the first subsystem are arranged such that at least a portion of fluid in the first subsystem is recirculated within the first subsystem;
the second subsystem comprising:
   cooling means configured to receive the separated activated solid material and to cool the activated solid material to or below a stabilizing temperature.

The activation system allows for activation and optionally calcination of SCM's with a low emission of CO2. If the electricity utilized for heating is produced in a green manner, the activation system allows for a substantial to completely fossil-free production of activated SCM's. The electric heating allows for greater temperature control in the system, which provides optimal conditions for activating the SCM-precursor.

The electric heating means do not require a source of oxygen for combustion and the fluid composition within the first subsystem may be easily adjusted and controlled for improved process conditions. Because the first subsystem is arranged with recirculation, the requirement for introducing fluid to the first subsystem may be limited. As a result, the volume of outlet fluid comprising volatiles are small compared to a process with constant provision of e.g., air.

The term "fluid" is used to describe a gas and/or a liquid in the activation system since the fluid may undergo phase transition due to heating and cooling operations. The fluid is typically in gaseous form once heated towards the activation temperature and may be at least partially liquefied if cooled to a condensation temperature. The fluid may comprise solids such as fine particles. If additional fluid is provided to the activation system, it may be provided as a liquid or as a gas.

In one embodiment, the first subsystem may be operated at oxygen-depleted conditions or reducing conditions which provides ideal conditions for providing a reduced SCM, such as a greyish colored clay material.

In one embodiment, the oxygen concentration in the first subsystem may be configured to oxidize gaseous species released from the activated SCM into oxides. As an example, the oxygen concentration in the first subsystem may be configured for oxidizing sulfur species into SO2.

The oxygen concentration in the first subsystem may be controlled by providing a source of oxygen such as air, a nitrogen depleted oxygen containing gas, or concentrated oxygen.

The activation vessel may be configured to provide a thermally induced reaction. As an example, the activation vessel may be a calcination vessel where the SCM precursor is calcined. Calcination typically refers to dissociation (of carbonates) and associated loss of gaseous species.

Depending on how the activation system is operated, the main addition of fluids to the first subsystem may be volatiles released from the SCM-precursor material as it is heated and activated. The type of volatiles highly depends on the environment in the first subsystem, such as oxidizing/reducing conditions, but may include H2O, NOx, NH3, HCN, Sox, H2S, Cox, and/or CxHy.

In case of organic carbon content in the raw material, some oxygen may be provided to the first subsystem to facilitate combustion of the organic carbon and utilize the energy and lower emissions.

It is expected that some minor false air may enter the first subsystem and may be sufficient for combusting organic carbon released from the raw materials.

Because the SCM-precursor material typically releases volatiles, some fluids will have to be removed from the first subsystem to maintain a substantially constant fluid balance.

In one or more embodiments, at least 50 V/V% of the fluids in the first subsystem are recirculated, such as at least 60V/V%, such as 70 V/V%, such as 80 V/V%, such as 90V/V%. In one or more embodiments, 60 V/V% to 95 V/V% of the fluids in the first subsystem are recirculated. Depending on the activation temperature and heat loss in the system, it may be required to further cool the fluids in the first system. This may be due to condensation or because of pressurizing vessels such as a fan, requiring lower temperatures.

In one or more embodiments, the first subsystem may comprise a number of components to manipulate the temperature of the fluid through a cycle of heating and cooling steps.

Because of the cooling and heating in the activation system, the term "fluid" is used to describe both gasses and liquids, since these may undergo condensation and evaporation through the system.

In some embodiments of the invention, it may be desirable to provide some addition of a reducing agent. The reducing agent may be hydrogen, ammonia, and/or small amounts of carbon compounds. This depends on which species are released from the SCM-precursor and which process conditions are preferred in the activation system.

In one or more embodiments, the cooling means comprising a cooling gas inlet and a cooling vessel configured for contacting the activated solid SCM provided from the first subsystem with the cooling gas provided from the cooling gas inlet, such that the activated SCM is cooled from a temperature around the activation temperature to a stabilizing temperature. Preferably, the second subsystem is substantially fluidly isolated from the first subsystem. This means that substantially no fluids from the first subsystem are provided to the second subsystem together with the separated solids. It should be understood that it may be practically impossible to separate all fluids from the solids and that "substantially no fluids" should be understood as how the skilled person would interpret "no fluids" with the technical tolerance provided by a state-of-the-art separation method.

In one or more embodiments, the activation system comprises a reducing vessel coupled to the first subsystem. The reducing vessel may be configured to receive the activated SCM material, provide a residence time of the activated SCM material under reducing conditions to provide a reduced SCM. The reducing vessel may further be coupled to the cooling vessel.

A solid SCM-precursor material means a solid material that once activated achieves cementitious properties and thus may be utilized as a SCM. Possible examples of SCM precursors that require calcining/activation includes, but are not limited to, shales, clays, pozzolans (partially hydrated), zeolites, partially hydrated ashes (such as deposited fly ash).

The first and second subsystems differentiate by being operated at different temperature ranges. The first subsystem may be characterized as a high temperature system and the second subsystem as a low temperature system. The temperatures in the first subsystem may vary from around the condensation temperature of the volatiles to at least above the activation temperatures of the SCM-precursor. The activation temperature depends on the chemical composition of the SCM-precursor. Especially different clays may require different activation temperatures. The activation temperature may vary from around 600°C to 1100°C. The activation system is typically optimized for a specific type of SCM with slight chemical differences. As an example, the activation system may be optimized for temperatures from 600°C to 700°C, 700°C to 800°C, 800°C to 900°C, 900°C to 1000°C, or 1000°C to 1100°C.

The electric heating means may be an electric arc burner, an electric hot gas generator, induction heating means, and/or resistive heating means.

An activated SCM may be a calcined SCM, i.e., a SCM-precursor which has been thermally activated to achieve/improve its cementitious properties. A thermally activated clay is often referred to as a calcined clay.

Examples of gas-solid separation means may include, but are not limited to, gas-cyclone(s) and/or filter(s).

The fluid outlet may be a purge to remove fluid from the system. In one embodiment, the fluid outlet is a vent/stack where excess gas may be removed from the system. Alternatively, the fluid outlet may be liquid outlet arranged after a condenser such that the volatiles are condensed and removed in liquid form. The fluid removed through the fluid outlet may be a mixture of volatiles and other components to maintain a constant flow in the system.

The fluid outlet may be connected to suitable abatement means for removing undesired species. In one or more embodiments, the cleaned fluid may be returned to the activation system.

The cooling gas inlet may provide a cooling gas to the second subsystem. The cooling gas may be atmospheric air.

In one or more embodiments, the one or more cooling vessels may be a heat exchanger, such as a powder cooling. In a particular embodiment, the cooling vessel may be a gas cyclone, preferably a multistage gas cyclone.

In one or more embodiments of the invention, at least 50 w/w% of the fluid in the first subsystem is recirculated within the first subsystem, preferably 60 w/w%, more preferably 70 w/w%, more preferably 80 w/w%, more preferably 90w/w%.

There are several potential benefits of recirculating volatile emissions released during preheating back to the calciner. Any released organic carbon emission returned to calciner may be combusted and thereby lower the energy consumption and minimize or even eliminate the need for organic emission abatement. Any potential NOx returned to the calciner may be abated by simple low capital abatement equipment such as SNCR instead of a more costly SCR. Any potential HCl, HF, SO2 emissions returned to the calciner may achieve a higher adsorption efficiency to the solids in the calciner minimizing the need for scrubber abatement.

How much fluid being removed from the system through the fluid outlet, and thus how much is recirculated, depends on the type and amount of volatiles produces from the SCM-precursor and on how gas-tight the first subsystem is.

In one or more embodiments of the invention, the first subsystem further comprises a secondary heating means such that heat may be provided in a hybrid solution. The secondary heating means may be an indirect heating. By indirect heating is meant that substantially no combustion gases or exhaust gases are provided to the first subsystem while heating with the secondary heating means. This could e.g., be achieved by heating on the outside of the activation vessel with a hydrogen burner, or by heating the fluids in the first subsystem in a heat exchanger.

In one or more embodiments, the first subsystem further comprises a condenser unit and wherein the fluid outlet being configured to remove a condensate comprising at least a portion of volatiles released from the activated SCM precursor.

In one or more embodiments, the first subsystem comprising an O₂-sensor and being configured with means to regulate the O₂ concentration based on a measurement from the O₂-sensor. The O₂-sensor may be a sensor which may measure a parameter indicative of O₂-content.

The O₂ concentration may be adjusted by removing a larger volume of recirculated fluid, or it may be contacted with a chemical looping material. In some embodiments, it is desirable to at least partially remove di-oxygen from the fluid to obtain desired reactions during activation of the SCM-precursor. This can be achieved by contacting at least a portion of the fluid with a redox-active solid, which has been brought into a lower oxidation state prior to contacting. Hereby, the di-oxygen from the fluid will react with the redox-active solid resulting in an increase in oxidation state accompanied by scavenging the di-oxygen from the fluid stream. The redox-potential of the redox-active solid can be tailored to adjust the di-oxygen concentration in the fluid circuit to a desired redox-potential. Activation or re-activation of the redox-active solids can be achieved by several methods including contacting with other chemical species or by electrochemical means. Examples of redox-active solids are metal oxides, such as different oxidation states of FeO, CuO, MnO.

In one or more embodiments, the components in the second subsystem are configured for recirculating at least a portion of the fluid in the second subsystem within the second subsystem.

The fluids, preferably gases, in the second subsystem may be used to cool the SCM from the first subsystem. This cooling step of the SCM may be carried out once the SCM has left the first subsystem, and thus the cooling may be carried out in the second subsystem. This ensures that the oxygen containing gas from the second subsystem is not provided into the first subsystem.

It is preferred that the heat/energy obtained in the fluid is used to heat exchange with the first subsystem. To supply enough gas having a sufficiently low temperature, it may also be required to provide a constant flow of cooling gas, e.g., atmospheric air, to maintain a temperature suitable for cooling the SCM. In situations where the SCM is a clay comprising iron, the cooling should preferably be a quench cooling such that the temperature of the SCM is quickly lowered below a stabilizing temperature to preserve the grey color of the SCM.

In one or more embodiments, a reducing vessel is coupled to the first subsystem and second subsystem such that SCM from the first subsystem passes through the reducing vessel before being provided to the second subsystem. In a particular embodiment, excess reduction agent from the reducing vessel may be provided to the first subsystem. A reducing vessel may be required if the atmosphere in the first subsystem comprises excessive oxygen concentrations. In this case, the reducing vessel can be utilized to provide the SCM in a reduced state and thus control the color of an iron containing SCM. The reducing vessel is a vessel allowing the SCM to pass through while comprising a reducing atmosphere, i.e., an at least di-oxygen depleted atmosphere. This may be obtained by providing a reducing agent such as hydrogen, ammonia, or a carbon containing substance in excess of di-oxygen available at temperatures above the reduction agent ignition point.

In one or more embodiments, the second subsystem comprising means for downsizing a solid material, means for drying the solid material, and a gas-solid separation means. Said means for downsizing, drying and/or separating being located downstream of and configured to receive the hot gas from the cooling vessel. The gas-solid separation means being configured to separate dried solid material into a solid material stream. The second subsystem further being configured to provide the dried solid material stream to the first subsystem. In one or more embodiments, the downsizing means, and drying means may be a dryer crusher. In one or more embodiments, the gas-solid separation means may be an air filter or a gas cyclone(s). The above embodiment allows for utilization of hot gas from cooler for drying the raw material.

In one or more embodiments, the first subsystem comprises a fluid inlet for providing water or steam to the first subsystem. It is believed that some steam / humidity during activation of especially clays provide an increased activity (cementitious properties). The steam may be provided as liquid water that evaporates once it enters the first subsystem, or it may be provided utilizing a steam generator.

In one or more embodiments, the second subsystem comprises electric heating means. The electric heating means may be configured to heat the gas, preferably after cooling the activated SCM material, to a temperature suitable to drying a raw material.

In another aspect, the invention relates to a method of activating a SCM-precursor material to provide an activated SCM suitable for clinker substitution. The method comprising the steps of:
a. electrically heating a fluid to at least an activation temperature of a SCM-precursor;
b. providing a solid SCM-precursor and contacting said solid SCM precursor with the electrically heated fluid for a time sufficient to activate the SCM-precursor to a SCM;
c. separating the SCM from the fluids;
d. removing a portion of the fluids and recirculating at least a portion of the remaining fluids to the electrically heating step;
e. providing a cooling gas;
f. cooling the separated SCM to a temperature below a stabilization temperature of the SCM by contacting the activated SCM with the cooling gas.

The steps e. and f. are carried out separately from the steps a., b., c., and d., such that substantially no gasses from steps e. and f are provided to steps a., b., c. or d.

Separating the gases in different subsystems provides for different process conditions in different phases of the process.

During activation of the SCM-precursor, volatiles and water may be released. A portion of the fluids are therefore removed from the process to achieve substantially constant fluid balance in the process.

In one or more embodiments, the fluid heated in step a. may be substantially oxygen depleted. In this context, oxygen depleted means a gas having an di-oxygen content less than atmospheric air. The fluid may comprise oxygen molecules bound in e.g., water, volatiles or organic compounds, but in this context, oxygen depleted refers to free oxygen molecules, i.e., di-oxygen. Preferably, the oxygen depleted gas has an oxygen content of less than 10 V/V%, more preferably less than 5 V/V%. In one or more embodiments, the oxygen depleted gas is substantially free from di-oxygen.

The required activation temperature highly depends on the type of SCM. Typically, it is between 500°C -1100°C.

The stabilizing temperature may be below 350-650°C depending on the SCM material. For iron containing SCM materials, such as some clays, that may oxidize to a reddish color, a stabilizing temperature of 350-450°C may be suitable to avoid reddish colorization. For other SCM materials a stabilizing temperature of 450-650°C may be suitable to substantially stop chemical conversion of the SCM material.

In one or more embodiments, the CO₂ concentration of the fluids recirculated to the electrical heating step may be measured. Preferably the concentration of CO₂ may be regulated. Depending on the desired operation conditions, it may be preferred to operate with a high or low CO₂ concentration. In one or more embodiments, it may be desired to operate at concentrations below 10 V/V%, such as below 5 V/V%.

In one or more embodiments, it may be desirable to operate at CO₂ concentration at or above 10 V/V%, such as at or above 20 V/V%, such as at or above 50 V/V%.

The CO₂ concentration may influence the reaction rates and equilibrium in the system. Additionally, it may be desirable to have a purge with a high CO₂ concentration for carbon capture, or a low CO₂ concentration if the outlet fluid is just to be purged into surroundings.

In one or more embodiments, substantially all the remaining gas in step d., after removal of at least a portion of the substances released from the activated SCM solid, is recirculated.

In one or more embodiments, at least a portion of the gas after step c. is cooled and condensed into a condensate and wherein a portion of fluid in step d. is removed in liquid form.

In one or more embodiments, the method further comprising the step of drying the solid SCM-precursor prior to step b., using the cooling gas of from step f. and thereby recuperating the heat in the cooling gas. In one or more embodiments, the cooling gas utilized for drying may be thermally boosted partially or fully by electrically heating the cooling gas.

The dried SCM-precursor may be separated from the gas and fed to step a., substantially without providing any gas to step a.

In one or more embodiments, the method further comprising the step of removing heat from the cooling gas after step f. and recirculating at least a portion of the cooled cooling gas to step f.

Further presently preferred embodiments and further advantages will be apparent from the following detailed description and the appended dependent claims.

### Brief description of drawings

The invention will be described in more detail below by means of non-limiting examples of presently preferred embodiments and with reference to the drawings, in which:
Fig. 1 shows a process flow diagram of an activation system according to one embodiment of the invention;
Fig. 2 shows a process flow diagram of an activation system according to another embodiment of the invention;
Fig 3: shows a process flow diagram of an activation system according to another embodiment of the invention.

### Detailed description

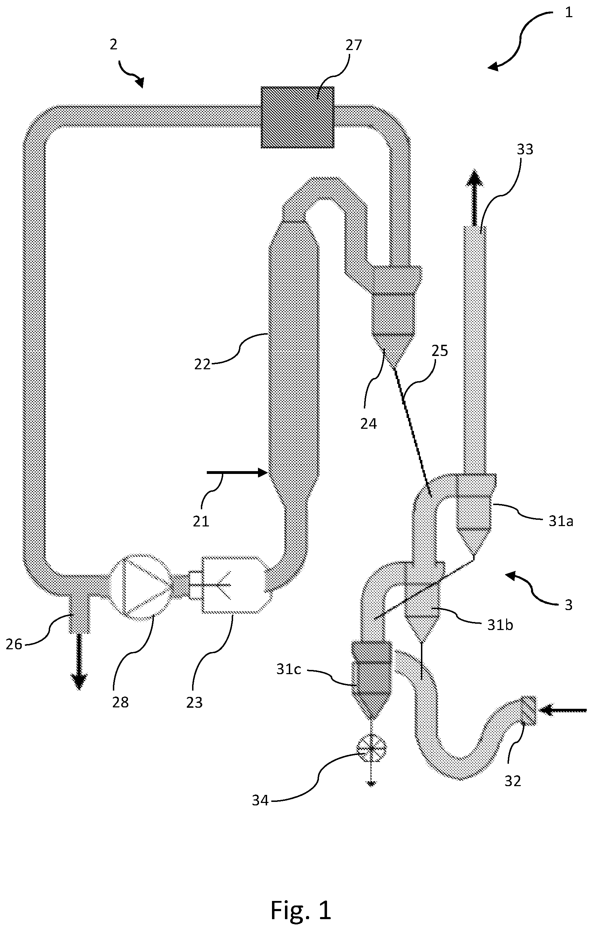

Fig. 1 shows a process flow diagram of an activation system 1 according to one embodiment of the invention. The activation system 1 comprising a first subsystem 2 and a second subsystem 3. An inlet 21 is configured to provide solid material into the first subsystem 2. In the particular embodiment shown, the inlet 21 is connected to the activation vessel 22. An example of an activation vessel may be a flash calciner or other heating means. The solid material is thus provided directly into the activation vessel 22. The inlet 21 may optionally be configured to provide a reducing agent to the first subsystem 2. Alternatively, a second inlet (not shown) may provide the optional reducing agent. In the activation vessel 22, the solid material is activated by coming into contact with a hot gas. An electric heating means 23 is provided upstream of the activation vessel 22 for heating a gas to at least an activation temperature of the solid material. A gas-solid separation means in the form of a gas cyclone 24 is provided downstream of the activation vessel 22. The separated solid material is provided to the second subsystem 3 through the feed pipe 25. The separated gas from the gas cyclone 24 is cooled in a heat exchanger and provided to a fan 28 before being recirculated back to the electric heating means 23. A fluid outlet 26 is configured to remove a portion of the fluid from the first subsystem 2. Because different chemical compounds may be released from the solid material during activation, some fluids may be removed from the system to maintain a constant fluid balance in the first subsystem 2. The fluid outlet 26 may be suitable for removing an outlet gas or an outlet liquid depending on the cooling in the heat exchanger 27.

The second subsystem comprising a number of cooling vessels in the form of cyclones 31a, 31b, 31c. The activated solid material provided to the second subsystem 3 through the feed pipe 25 is provided into the cyclones 31a, 31b, 31c, where it may be quench cooled with a gas. In the embodiment shown the cooling gas is atmospheric air provided from the cooling gas inlet 32. A material outlet 34 is provided in the cyclone 31c to remove the cooled solid material. The cooling gas exits through the gas outlet 33.

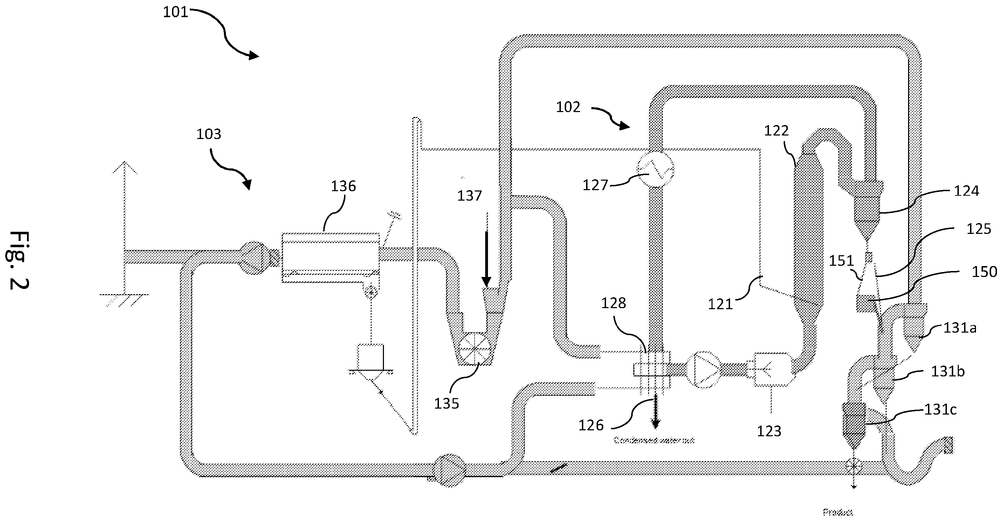

Turning now to Fig. 2 showing a process flow diagram of an activation system 101 according to one or more embodiments of the invention. The activation system 101 comprising a first subsystem 102 and a second subsystem 103. The first subsystem 102 being similar to the first subsystem 2 described in relation to Fig. 1.

The first subsystem 102 comprising an inlet 121 coupled to the activation vessel 122 and being configured to provide solid material into the first subsystem 102. The solid material is provided to the inlet 121 from a dryer 135, which utilizes gas from the second subsystem 103 to dry and deagglomerate the solid material. This allows for better energy utilization and less evaporated water in the first subsystem 102. Alternatively, the dryer 135 could be a grinding system such as a ball mill and a vertical roller mill for grinding and drying. An electric heating means 123 is provided upstream of the activation vessel 122 for heating a gas to at least an activation temperature of the solid material. A gas-solid separation means in the form of a gas cyclone 124 is provided downstream of the activation vessel 122. The separated solid material is provided to the second subsystem 103 through the feed pipe 125. A reducing vessel 150 is shown in Fig. 2 as an optional feature. A second feed pipe 151 allows solid material from the gas cyclone 124 to be provided to the reducing vessel 150. If the reducing vessel is operated with a combustible gas as a reducing agent, the reducing vessel may optionally be fluidly coupled to the calciner to provide excess gas to the calciner for combustion.

The separated gas from the gas cyclone 124 may optionally be cooled in a heat exchanger 127 to remove and utilize the high temperature energy from the gas. The gas is then provided into a condenser 128 where the temperature is lowered to below a condensation point of the gas to remove fluid and chemical compounds released form the activation solid material in liquid form. In the embodiment shown, gas from the second subsystem 103 is utilized for condensing gas in the condenser 128. The heat recuperated from the gas in the second subsystem 103 may then be utilized in the dryer 135 for drying the solid material. After condensation, the remaining fluids are returned to the electric heating means 123 and recirculated within the first subsystem 102. One or more fluid outlets 126 may be configured to remove a portion of the condensed fluid and or gas from the first subsystem 102.

In the embodiment shown in Fig. 2, the second subsystem 103 is also provided in a loop configuration to provide a system which is as energy-efficient as possible.

The second subsystem 103 comprising a number of cooling vessels in the form of cyclones 131a, 131b, 131c. The activated solid material provided to the second subsystem 103 through the feed pipe 125 or from the reducing vessel 150 to the cyclones 131a, 131b, 131c, where it is quench-cooled with a gas. In the embodiment shown, the cooling gas is atmospheric air provided from the cooling gas inlet 132 combined with recirculated gas. Solid material is provided into the activation system 101 through the main inlet 137 and into the dryer 135. The warm gas from the cyclones 131a, 131b, 131c is utilized to dry and transport the solid material into a filter 136. The gas and solids are separated and the solid are provided into the first subsystem 102 for activation. the separated gas in the second subsystem is either returned to the cyclones 131 or provided to the condenser 128.

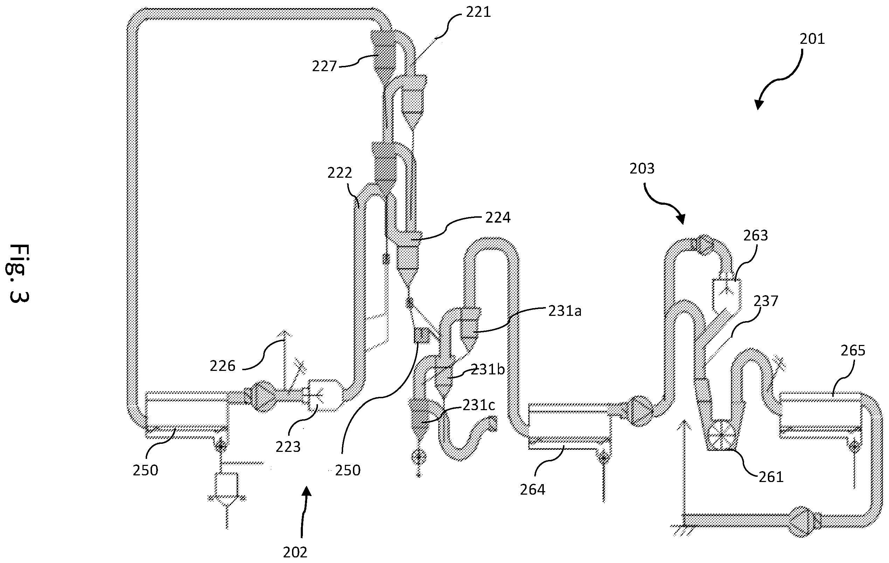

Turning now to Fig. 3 showing an activation system 201. The activation system 201 comprising a first subsystem 202 and a second subsystem 203. The first subsystem 202 being similar to the first subsystem 2 described in relation to Fig. 1. The subsystem 203 further comprising a solid-gas separation means in the form of a hot electrostatic precipitator (ESP) 251 or alternatively a ceramic filter. The hot ESP 251 is located upstream of the fluid outlet 226 and the electric heating means 223 to remove particles prior to removal and reheating of the fluid. The heat exchanger in Fig 3. Is showed as a multistage cyclone preheater 227. The fluid in the first subsystem 202 is not condensed, but instead excess fluid is removed in gaseous form through outlet 226.

The second subsystem 203 is configured with gas-solid separation means in the form of a hot ESP 264, a downsizing means in the form of a mill 261 and an electric heating means in the form of an electric hot gas generator (HGG) 263. Alternatively, the mill 261 may be a dryer crusher. The second subsystem 202 is thereby configured to utilize heat from the cooling vessels 231a, 231b and 231c to heat and dry the raw material.

The hot gas from the cyclones 231a, 231b, 231c is provided to an optional hot ESP 264 for removing any solids. A portion of the gas may be provided directly into the mill 261 whereas the remaining gas may be heated by the HGG 263. A raw material inlet 237 is connected to the mill, or just before the mill, where the hot gas is utilized to dry the raw material. Downstream of the mill 261, the solid material may be filtered out in the filter apparatus 265 and subsequent be provided to the material inlet 221 in the first subsystem 202. The gas may be recirculated within the second subsystem 203 and/or abated and purged.

## Claims

1. An activation system (1, 101, 201) for activating a Supplementary Cementitious Material (SCM) precursor into a SCM suitable for clinker substitution, the activation system (1, 101, 201) comprising a first subsystem (2, 102, 202) and a second subsystem (3, 103, 203),
the first subsystem (2, 102, 202) comprising:
an inlet (21, 121) for providing a solid SCM precursor material and optionally a reducing agent;
electric heating means (23, 123, 223) suitable for heating a fluid to at least an activation temperature of the solid SCM precursor material;
an activation vessel (22, 122) for contacting the solid SCM precursor material with the heated fluid to activate the solid SCM precursor material;
a fluid outlet (26, 126, 226);
a separation means (24, 124) configured to separate the activated solid SCM material from the fluid;
means to provide the activated solid SCM material to the second subsystem (3, 103, 203); and
wherein the components in the first subsystem (2, 102, 202) are configured to recirculate at least a portion of fluid in the first subsystem (2, 102, 202) within the first subsystem (2, 102, 202);
the second subsystem (3, 103, 203) comprising cooling means (31a, 31b, 31c, 131a, 131b, 131c, 231a, 231b, 231c) configured to receive the separated activated solid SCM material and to cool the activated solid SCM material to or below a stabilizing temperature..

2. The activation system (1, 101, 201) according to claim 1, wherein the first subsystem is configured for recirculating at least 50 V/V% of the fluid in the first subsystem (2, 102, 202), preferably 60 V/V%, more preferably 70 V/V%, more preferably 80 V/V%, more preferably 90V/V%.

3. The activation system (1, 101, 201) according to claim 1 or claim 2 wherein the first subsystem (2, 102, 202) further comprising a secondary heating means, preferably wherein the secondary heating means is an indirect heating means.

4. The activation system (1, 101, 201) according to any previous claim, wherein the first subsystem (2, 102, 202) further comprising a condenser unit (128) and wherein the fluid outlet (126) being configured to remove a condensate comprising substances released from the activated solid SCM material.

5. The activation system (1, 101, 201) according to any previous claim, wherein the first subsystem (2, 102, 202) comprising an O₂-sensor and being configured with means to regulate the O₂ concentration based on a measurement from the O₂-sensor.

6. The activation system (1, 101, 201) according to any previous claim wherein the second subsystem (3, 103, 203) is configured to recirculate at least a portion of the fluid within the second subsystem (3, 103, 203).

7. The activation system (1, 101, 201) according to any previous claim wherein the second subsystem (3, 103, 203) comprising means for downsizing a solid material, means for drying a solid material, and a gas-solid separation means, preferably located downstream of, and configured to receive a gas from, the cooling vessel.

8. The activation system (1, 101, 201) according to claim 7, wherein the dryer and sizer being located downstream of and configured to receive a hot gas from the cooling vessel, and wherein said gas-solid separation means being configured to separate dried solid material into a solid material stream and wherein the second subsystem (3, 103, 203) further being configured to provide the dried solid material stream to the first subsystem (2, 102, 202).

9. The system according to any previous claim wherein the first subsystem (2, 102, 202) comprising a fluid inlet for providing water or steam to the first subsystem (2, 102, 202).

10. A method of activating a solid SCM precursor material to provide an activated SCM suitable for clinker substitution comprising the steps of:
a. electrically heating a fluid to an activation temperature of the solid SCM precursor material;
b. providing a solid SCM precursor material and contacting said solid SCM precursor material with the electrically heated fluid;
c. separating the activated SCM from the fluid;
d. removing at least a portion of the fluids and recirculating at least a portion of the remaining fluids to the electrical heating step;
e. providing a cooling gas;
f. cooling the separated activated SCM to a temperature below a stabilization temperature of the SCM by contacting the activated SCM with the cooling gas

11. The method according to claim 10, wherein steps a. to d. are carried out in a first subsystem (2, 102, 202) and steps e. to f. are carried out in a second subsystem (3, 103, 203), and wherein the first subsystem (2, 102, 202) and second subsystem (3, 103, 203) are substantially fluidly isolated from each other.

12. The method according to claim 10 or 11 wherein the remaining fluid in step d. comprises at least 50 V/V% of the fluids provided in step a., such as at least 60V/V%, such as 70 V/V%, such as 80 V/V%, such as 90V/V%.

13. The method according to claim 10 to 12 wherein the gas after step c. is cooled and condensed into a condensate and wherein the fluid removed in step d. is removed in liquid form.

14. The method according to claim 10 to 13, wherein the method further comprising the step of drying the solid SCM-precursor material prior to step b., using the cooling gas from step f.

15. The method according to claims 10 to 14, wherein the method further comprising the step of removing heat from the cooling gas after step f. and recirculating at least a portion of the cooled cooling gas to step f.

## Patentansprüche

1. Aktivierungssystem (1, 101, 201) zur Aktivierung eines Vorläufers für einen zementhaltigen Zusatzstoff (SCM) in einen für den Klinkerersatz geeigneten SCM, wobei das Aktivierungssystem (1, 101, 201) ein erstes Teilsystem (2, 102, 202) und ein zweites Teilsystem (3, 103, 203) umfasst, wobei das erste Teilsystem (2, 102, 202) umfasst:
einen Einlass (21, 121) zum Bereitstellen eines festen SCM-Vorläufermaterials und optional eines Reduktionsmittels;
elektrische Heizmittel (23, 123, 223), die dazu geeignet sind, ein Fluid auf zumindest eine Aktivierungstemperatur des festen SCM-Vorläufermaterials zu erwärmen;
einen Aktivierungsbehälter (22, 122) zum Bringen des festen SCM-Vorläufermaterials in Kontakt mit dem erwärmten Fluid, um das feste SCM-Vorläufermaterial zu aktivieren;
einen Fluidauslass (26, 126, 226);
ein Trennmittel (24, 124), das zum Trennen des aktivierten festen SCM-Materials von dem Fluid ausgebildet ist;
Mittel zum Bereitstellen des aktivierten festen SCM-Materials an das zweite Teilsystem (3, 103, 203); und
wobei die Komponenten in dem ersten Teilsystem (2, 102, 202) so ausgebildet sind, dass zumindest ein Teil des Fluids in dem ersten Teilsystem (2, 102, 202) innerhalb des ersten Teilsystems (2, 102, 202) rezirkuliert wird;
wobei das zweite Teilsystem (3, 103, 203) Kühlmittel (31a, 31b, 31c, 131a, 131b, 131c, 231a, 231b, 231c) umfasst, die so ausgebildet sind, dass sie das getrennte aktivierte feste SCM-Material aufnehmen und das aktivierte feste SCM-Material auf oder unter eine Stabilisierungstemperatur kühlen.

2. Aktivierungssystem (1, 101, 201) nach Anspruch 1, wobei das erste Teilsystem zum Rezirkulieren von mindestens 50 V/V-% des Fluids in dem ersten Teilsystem (2, 102, 202) ausgebildet ist, vorzugsweise 60 V/V-%, bevorzugter 70 V/V-%, bevorzugter 80 V/V-%, bevorzugter 90 V/V-%.

3. Aktivierungssystem (1, 101, 201) nach Anspruch 1 oder Anspruch 2, wobei das erste Teilsystem (2, 102, 202) weiter ein sekundäres Heizmittel umfasst, wobei vorzugsweise das sekundäre Heizmittel ein indirektes Heizmittel ist.

4. Aktivierungssystem (1, 101, 201) nach einem vorstehenden Anspruch, wobei das erste Teilsystem (2, 102, 202) weiter eine Kondensatoreinheit (128) umfasst und wobei der Fluidauslass (126) zum Entfernen eines Kondensats ausgebildet ist, das aus dem aktivierten festen SCM-Material freigesetzte Stoffe umfasst.

5. Aktivierungssystem (1, 101, 201) nach einem vorstehenden Anspruch, wobei das erste Teilsystem (2, 102, 202) einen O₂-Sensor umfasst und mit Mitteln zum Regulieren der O₂-Konzentration auf der Grundlage einer Messung von dem O₂-Sensor ausgebildet ist.

6. Aktivierungssystem (1, 101, 201) nach einem vorstehenden Anspruch, wobei das zweite Teilsystem (3, 103, 203) so ausgebildet ist, dass zumindest ein Teil des Fluids innerhalb des zweiten Teilsystems (3, 103, 203) rezirkuliert wird.

7. Aktivierungssystem (1, 101, 201) nach einem vorstehenden Anspruch, wobei das zweite Teilsystem (3,103,203) Mittel zum Verkleinern eines Feststoffs, Mittel zum Trocknen eines Feststoffs und ein Gas-Feststoff-Trennmittel umfasst, das vorzugsweise stromabwärts des Kühlbehälters angeordnet und zum Aufnehmen eines Gases daraus ausgebildet ist.

8. Aktivierungssystem (1, 101, 201) nach Anspruch 7, wobei der Trockner und der Verkleinerer stromabwärts des Kühlbehälters angeordnet und zum Aufnehmen eines heißen Gases daraus ausgebildet sind, und wobei das Gas-Feststoff-Trennmittel zum Trennen von getrocknetem Feststoff in einen Feststoffstrom ausgebildet ist, und wobei das zweite Teilsystem (3, 103, 203) weiter zum Bereitstellen des getrockneten Feststoffstroms an das erste Teilsystem (2, 102, 202) ausgebildet ist.

9. System nach einem vorstehenden Anspruch, wobei das erste Teilsystem (2, 102, 202) einen Fluideinlass zum Bereitstellen von Wasser oder Dampf an das erste Teilsystem (2, 102, 202) umfasst.

10. Verfahren zur Aktivierung eines festen SCM-Vorläufermaterials zum Bereitstellen eines aktivierten SCM, der für den Klinkerersatz geeignet ist, umfassend die folgenden Schritte:
a. elektrisches Erwärmen eines Fluids auf eine Aktivierungstemperatur des festen SCM-Vorläufermaterials;
b. Bereitstellen eines festen SCM-Vorläufermaterials und Bringen des festen SCM-Vorläufermaterials in Kontakt mit dem elektrisch erwärmten Fluid;
c. Trennen des aktivierten SCM von dem Fluid;
d. Entfernen zumindest eines Teils der Fluide und Rezirkulieren zumindest eines Teils der verbleibenden Fluide in den Schritt des elektrischen Erwärmens;
e. Bereitstellen eines Kühlgases;
f. Kühlen des getrennten aktivierten SCM auf eine Temperatur unterhalb einer Stabilisierungstemperatur des SCM durch Bringen des aktivierten SCM in Kontakt mit dem Kühlgas.

11. Verfahren nach Anspruch 10, wobei die Schritte a. bis d. in einem ersten Teilsystem (2, 102, 202) durchgeführt werden und die Schritte e. bis f. in einem zweiten Teilsystem (3, 103, 203) durchgeführt werden, und wobei das erste Teilsystem (2, 102, 202) und das zweite Teilsystem (3, 103, 203) im Wesentlichen fluidisch voneinander getrennt sind.

12. Verfahren nach Anspruch 10 oder 11, wobei das verbleibende Fluid in Schritt d. mindestens 50 V/V-% der in Schritt a. bereitgestellten Fluide umfasst, beispielsweise mindestens 60 V/V-%, beispielsweise 70 V/V-%, beispielsweise 80 V/V-%, beispielsweise 90 V/V-%.

13. Verfahren nach Anspruch 10 bis 12, wobei das Gas nach Schritt c. gekühlt und zu einem Kondensat kondensiert wird und wobei das in Schritt d. entfernte Fluid in flüssiger Form entfernt wird.

14. Verfahren nach Anspruch 10 bis 13, wobei das Verfahren weiter den Schritt des Trocknens des festen SCM-Vorläufermaterials vor Schritt b. unter Verwendung des Kühlgases aus Schritt f. umfasst.

15. Verfahren nach Anspruch 10 bis 14, wobei das Verfahren weiter den Schritt des Entfernens von Wärme aus dem Kühlgas nach Schritt f. und des Rezirkulierens zumindest eines Teils des gekühlten Kühlgases in den Schritt f. umfasst.

## Revendications

1. Système d'activation (1, 101, 201) pour activer un précurseur de matériau cimentaire supplémentaire (SCM) en un SCM adapté à une substitution de clinker, le système d'activation (1, 101, 201) comprenant un premier sous-système (2, 102, 202) et un second sous-système (3, 103, 203),
le premier sous-système (2, 102, 202) comprenant :
une entrée (21, 121) pour fournir un matériau précurseur de SCM solide et facultativement un agent réducteur ;
un moyen de chauffage électrique (23, 123, 223) adapté pour chauffer un fluide à au moins une température d'activation du matériau précurseur de SCM solide ;
un récipient d'activation (22, 122) pour mettre en contact le matériau précurseur de SCM solide avec le fluide chauffé afin d'activer le matériau précurseur de SCM solide ;
une sortie de fluide (26, 126, 226) ;
un moyen de séparation (24, 124) configuré pour séparer du fluide le matériau SCM solide activé ;
un moyen de fournir le matériau SCM solide activé au second sous-système (3, 103, 203) ; et
dans lequel les composants dans le premier sous-système (2, 102, 202) sont configurés pour remettre en circulation au moins une partie du fluide dans le premier sous-système (2, 102, 202) à l'intérieur du premier sous-système (2, 102, 202) ;
le second sous-système (3, 103, 203) comprenant un moyen de refroidissement (31a, 31b, 31c, 131a, 131b, 131c, 231a, 231b, 231c) configuré pour recevoir le matériau SCM solide activé séparé et pour refroidir le matériau SCM solide activé à une température de stabilisation ou en dessous.

2. Système d'activation (1, 101, 201) selon la revendication 1, dans lequel le premier sous-système est configuré pour remettre en circulation au moins 50 % V/V du fluide dans le premier sous-système (2, 102, 202), de préférence 60 % V/V, plus préférentiellement 70 % V/V, plus préférentiellement 80 % V/V, plus préférentiellement 90 % V/V.

3. Système d'activation (1, 101, 201) selon la revendication 1 ou la revendication 2, dans lequel le premier sous-système (2, 102, 202) comprend en outre un moyen de chauffage secondaire, de préférence dans lequel le moyen de chauffage secondaire est un moyen de chauffage indirect.

4. Système d'activation (1, 101, 201) selon une quelconque revendication précédente, dans lequel le premier sous-système (2, 102, 202) comprend en outre une unité de condenseur (128) et dans lequel la sortie de fluide (126) est configurée pour éliminer un condensat comprenant des substances libérées à partir du matériau SCM solide activé.

5. Système d'activation (1, 101, 201) selon une quelconque revendication précédente, dans lequel le premier sous-système (2, 102, 202) comprend un capteur d'O₂et est configuré avec un moyen permettant de réguler la concentration d'O₂ sur la base d'une mesure provenant du capteur d'O₂.

6. Système d'activation (1, 101, 201) selon une quelconque revendication précédente, dans lequel le second sous-système (3, 103, 203) est configuré pour remettre en circulation au moins une partie du fluide à l'intérieur du second sous-système (3, 103, 203).

7. Système d'activation (1, 101, 201) selon une seconde revendication précédente, dans lequel le seconde sous-système (3, 103, 203) comprend un moyen de réduction de taille d'un matériau solide, un moyen de séchage d'un matériau solide et un moyen de séparation gaz-solide, de préférence situés en aval du récipient de refroidissement et configurés pour recevoir un gaz provenant de celui-ci.

8. Système d'activation (1, 101, 201) selon la revendication 7, dans lequel le sécheur et le calibreur sont situés en aval et configurés pour recevoir un gaz chaud provenant du récipient de refroidissement, et dans lequel ledit moyen de séparation gaz-solide est configuré pour séparer un matériau solide séché en un flux de matériau solide et dans lequel le second sous-système (3, 103, 203) est en outre configuré pour fournir le flux de matériau solide séché au premier sous-système (2, 102, 202).

9. Système selon une quelconque revendication précédente, dans lequel le premier sous-système (2, 102, 202) comprend une entrée de fluide pour fournir de l'eau ou de la vapeur au premier sous-système (2, 102, 202).

10. Procédé d'activation d'un matériau précurseur de SCM solide pour fournir un SCM activé adapté à une substitution de clinker, comprenant les étapes consistant à :
a. chauffer électriquement un fluide à une température d'activation du matériau précurseur de SCM solide ;
b. fournir un matériau précurseur de SCM solide et mettre en contact ledit matériau précurseur de SCM solide avec le fluide chauffé électriquement ;
c. séparer du fluide le SCM activé ;
d. supprimer au moins une partie des fluides et remettre en circulation au moins une partie des fluides restants vers l'étape de chauffage électrique ;
e. fournir un gaz de refroidissement ;
f. refroidir le SCM activé et séparé à une température inférieure à une température de stabilisation du SCM en mettant en contact le SCM activé avec le gaz de refroidissement.

11. Procédé selon la revendication 10, dans lequel les étapes a. à d. sont réalisées dans un premier sous-système (2, 102, 202) et les étapes e. à f. sont réalisées dans un second sous-système (3, 103, 203), et dans lequel le premier sous-système (2, 102, 202) et le second sous-système (3, 103, 203) sont sensiblement isolés l'un de l'autre par un fluide.

12. Procédé selon la revendication 10 ou 11, dans lequel le fluide restant à l'étape d. comprend au moins 50 % V/V des fluides fournis à l'étape a., comme au moins 60 % V/V, comme 70 % V/V, comme 80 % V/V, comme 90 V/V.

13. Procédé selon les revendications 10 à 12, dans lequel le gaz après l'étape c. est refroidi et condensé en un condensat et dans lequel le fluide retiré à l'étape d. est retiré sous forme liquide.

14. Procédé selon les revendications 10 à 13, dans lequel le procédé comprend en outre l'étape de séchage du matériau précurseur de SCM solide avant l'étape b. en utilisant le gaz de refroidissement de l'étape f.

15. Procédé selon les revendications 10 à 14, dans lequel le procédé comprend en outre l'étape de suppression de la chaleur du gaz de refroidissement après l'étape f. et de remise en circulation d'au moins une partie du gaz de refroidissement refroidi vers l'étape f.
